(19) Europäisches Patentamt
European Patent Office
Office européen des brevets

(11) Publication number: **0 392 602 A1**

(12) **EUROPEAN PATENT APPLICATION**

(21) Application number: **90200830.9**

(22) Date of filing: **06.04.90**

(51) Int. Cl.5: **C08L 77/00, C08K 5/09, C08K 5/54, C08K 3/16, C08K 7/14**

(30) Priority: **12.04.89 JP 92672/89**

(43) Date of publication of application: **17.10.90 Bulletin 90/42**

(84) Designated Contracting States: **AT BE CH DE DK ES FR GB GR IT LI NL SE**

(71) Applicant: **STAMICARBON B.V.**
**Mijnweg 1**
**NL-6167 AC Geleen(NL)**

(72) Inventor: **Tanabe, Takayoshi**
**2-304 Morigayama-cho**
**Yokkaichi-shi Mie-ken(JP)**
Inventor: **Takashima, Tsuyoshi**
**3100-2 Kishioka-cho**
**Suzuka-shi, Mie-ken(JP)**
Inventor: **Mitsui, Munehiro**
**Shofuryo, Morigayama-cho**
**Yokkaichi-shi, Mie-ken(JP)**
Inventor: **Tsuchikawa, Shuji**
**10-1, Mitakidai 1-chome**
**Yokkaichi-shi, Mie-Ken(JP)**

(54) **Polyamide resin composition.**

(57) The invention relates to a polyamide resin composition, comprising a mixture of 30 to 90 parts by weight of (a) a polyamide with a C/N ratio of between 4 and 7, (b) 10 to 70 parts by weight of a polyamide with C/N ratio of more than 7 and (c) 0.02 to 3 parts by weight based on 100 parts by weight of the mixture of a compound containing two or more carboxyl groups or an acid anhydride group.

The composition shows excellent moldability and resistance to metallic halide compounds.

EP 0 392 602 A1

# POLYAMIDE RESIN COMPOSITION

The present invention relates to a composition consisting of a mixture of different polyamide resins. In particular, it relates to a polyamide resin composition inhibiting die swelling attributable to low compatibility of the different polyamides mixed with each other and exhibiting an excellent resistance to metallic halide compounds.

Polyamide resins are thermoplastic resins which have found wide industrial application based on their high thermal resistance, rigidity, and fatigue resistance. It has been known that the excellent thermal and mechanical properties of polyamides depend on the degree of hydrogen bonding between the amide groups in the polyamide main chain, and these thermal and mechanical properties are improved if the concentration of amide groups increases. However, since amide groups are hydrophilic, an increase in the concentration of amide groups in the polyamide main chain causes an increase in the water absorption of the polyamide, which often effects the mechanical properties or causes dimensional instability. Nylon 6, Nylon 66 and Nylon 46, which have relatively high amide group concentrations, are disadvantageous in that when they come into contact with a highly concentrated metallic halide compound, such as a road salt, e.g. calcium chloride, and zinc chloride, molded articles produced therefrom suffer from so-called environmental stress cracking, resulting in a certain degree of deterioration.

It has been known that environmental stress cracking in polyamides of this kind with relatively high amide group concentrations is effectively suppressed by blending with a higher aliphatic polyamide or with a polyamide having one or more aromatic rings in the main chain (JP-A-57-80,449, 57-212,252 and 58-53,949).

However due to the low entropy of mixing, it is very difficult to obtain, homogeneous mixtures of polymers, resulting in die swelling during extrusion injection molding or delamination in molded articles. Blends of polyamides show similar draw backs, thereby causing serious problems in their industrial application.

The object of the present invention is to eliminate these problems, and develop a resin composition consisting of a mixture of different polyamides which can be easily molded and does not lead to any of the difficulties such as delamination in the molded articles produced therefrom.

It was surprisingly found that die swelling during the molding can be eliminated by addition of a small amount of a compound containing a polyvalent carboxylic acid or acid anhydride group to the polyamide resin mixture during the melt molding. It was also found that the molded articles thus again do not exhibit any of the disadvantages such as delamination. It was further found that the molded articles thus obtained, unexpectedly exhibit an improvement in mechanical strength.

Specifically, the present invention provides for a polyamide resin composition, comprising a mixture of (a) 30 to 90 parts by weight of a polyamide (A), wherein the proportion of the number of carbon atoms to that of nitrogen atoms in the polymer (C/N) is in the range of 4 to 7, (b) 10 to 70 parts by weight of a polyamide (B), wherein the proportion of the number of carbon atoms to nitrogen atoms in the polymer (C/N) is more than 7, (a) + (b) being 100 parts, and (c) 0.02 to 3 parts by weight, based on 100 parts of said mixture, of a compound (C) containing two or more carboxyl groups or an acid anhydride group.

Examples of the above polyamide component (A) are Nylon 4 (C/n = 4), Nylon 46 (C/N = 5), Nylon 6 (C/N = 6), Nylon 66 (C/N = 6), Nylon 7 (C/N = 7), and copolymers thereof. Nylon 46 is used preferably in consideration of its excellent thermal resistance and rigidity. If the component (A) has a C/N proportion of less than 4, the product exhibits a high melting point, which effects the moldability. If the component (A) has a C/N proportion of more than 7, it is difficult to obtain sufficient thermal resistance and rigidity.

Examples of the above polyamide component (B) are higher aliphatic polyamides, such as Nylon 610 (C/N = 8). Nylon 612 (C/N = 9), Nylon 11 (C/N = 11), and Nylon 12 (C/N = 12). Nylon 11 and Nylon 12 are preferable in consideration of their excellent resistance to metallic halide compounds. Other examples of the above polyamide component (B) are polyamides containing an aromatic or alicyclic component in the main chain. If the polyamide component (B) has a C/N proportion of only 7 or less, sufficient resistance to the metallic halide components is not obtained.

The proportion of the above polyamide component (A) is preferably 90 to 30 parts by weight of polyamide component (A) against 10 to 70 parts by weight of polyamide component (B), more preferably 85 to 50 parts by weight of polyamide component (A) against 15 to 50 parts by weight of the polyamide component (B), particularly 80 to 60 parts by weight of polyamide component (A) against 20 to 40 parts by weight of polyamide component (B). If the proportion of polyamide component (A) exceeds 90 parts by weight, sufficient resistance to metallic halide compounds is not obtained. If the proportion of polyamide component (A) is below 30 parts by weight and that of polyamide component B exceeds 70 parts by

weight, the resin composition thus obtained exhibits poor moldability and mechanical strength.

Examples of the compound containing two or more carboxyl groups or an acid anhydride group are bifunctional carboxylic acids, such as aliphatic dicarboxylic acids (e.g. oxalic, malonic, succinic, maleic, fumaric, glutaric, adipic, pimelic, suberic, azelaic, sebacic, undecanoic, undecanedioic, dodecanedioic, tridecanedioic and tetradecanedioic acid), aromatic dicarboxylic acids (e.g. isophthalic, terephthalic, diphenylmethane-4,4′-dicarboxylic, diphenylmethane-3,4′-dicarboxylic, diphenylmethane-3,3′-dicarboxylic, diphenyl-2,4′-dicarboxylic, 1,2-diphenylethane-3,4′-dicarboxylic, 1,2-diphenylethane-3,3′-dicarboxylic and 1,2-diphenylethane-2,4′-dicarboxylic acid, 2,2-bis(4-carboxyphenyl)propane, 2-(3-carboxyphenyl)propane 2-(4-carboxyphenyl)propane, 2,2-bis(3-carboxyphenyl)propane, 2-(2-carboxyphenyl)propane, 2(2-carboxyphenyl)2-(4-carboxyphenyl)propane) further diphenylether-4,4′-dicarboxylic, diphenylether-3,4′dicarboxylic, diphenylether-3,3′-dicarboxylic, diphenylether-2,4′-dicarboxylic, diphenylsulfide-4,4′-dicarboxylic, diphenylsulfide-3,4′-dicarboxylic, diphenylsulfide-3,3′-dicarboxylic, diphenylsulfide-2,4′-dicarboxylic, diphenylsulfone-4,4′-dicarboxylic, diphenylsulfone-3,4′-dicarboxylic, diphenylsulfone-3,3′-dicarboxylic, diphenylsulfone-2,4′-dicarboxylic, benzophenone-2,4′-dicarboxylic, benzophenone-4,4′-dicarboxylic, benzophenone-3,4′-dicarboxylic, benzophenone-3,3′-dicarboxylic, pyridine-2,6-dicarboxylic, 5-t-butyl-1,3-benzenedicarboxylic, 4-t-butyl-1,3-benzenedicarboxylic, 2-t-butyl-1,3-benzenedicarboxylic and 2-t-butyl-1,4-benzenedicarboxylic acid, 1,1,3-trimethyl-5-carboxy-3-(p-carboxyphenyl)indane, 1,1,3-trimethyl-4-carboxy-3-(p-carboxyphenyl)indane, 1,1,3-trimethyl-7-carboxy-3-(p-carboxyphenyl)indane, 1,1,3-trimethyl-5-carboxy-3-(o-carboxyphenyl)indane, 1,1,3-trimethyl-4-carboxy-3-(o-carboxyphenyl)indane, 1,1,3-trimethyl-7-carboxy-3-(o-carboxyphenyl)indane, 1,1,3-trimethyl-5-carboxy-6-methyl-3-(m-carboxy-p-methylphenyl)indane, 1,1,3-trimethyl-4-carboxy-6-methyl-3-(m-carboxy-p-methylphenyl)indane, 1,1,3-trimethyl-5-carboxyl-Ar.Ar-dichloro-3-(p-carboxy-Ar′. Ar-dichlorophenyl)indane, and 1,1,3-trimethyl-6-carboxy-Ar. Ar-dichloro-3-(p-carboxy-Ar′.Ar′-dichlorophenyl)indane (wherein Ar and Ar′ each stand for a given substituent in an undefined position of the phenyl ring)), and difunctional carboxylic acids and anhydrides such as alicyclic dicarboxylic acids (e.g. 1,4-cyclohexanedicarboxylic, 1,2-cyclohexanedicarboxylic, dicyclohexylmethane-4,4′-dicarboxylic, and adamatanedicarboxylic acid), trifunctional or higher polyvalent carboxylic acids (e.g. 1,3,5-benzenetricarboxylic 3,3′,4′-benzophenonetetracarboxylic, and pyromellitic acid as well anhydrides therof). Compounds containing either two or more carboxyl groups or an acid anhydride group can be used singly or in combination. Any suitable compound out of those illustrated can be selected, as necessary. The present invention is, however, not limited to the above examples.

The amount of component (C) is in the range of 0.02 to 3 parts by weight, preferably 0.05 to 2 parts by weight, more preferably 0.1 to 1 part by weight, based on 100 parts of the sum of the weights of components (A) and (B). If this value is below 0.05 parts by weight, the resin composition obtained does not satisfactorily attain the objects of the present invention, i.e., inhibitition of die swelling and molding stability. If the value exceeds 3 parts by weight, there is the disadvantage that the molten resin is susceptible to decomposition in the molding machines.

A polyamide resin composition which exhibits further improvement in mechanical strength can be obtained by blending a fibrous filler with the polyamide resin composition obtained according to the present invention.

Examples of fibrous fillers which can be used in the present context are glass fibers, carbon fibers, aramide fibers, and single crystal whiskers. However, the invention is not limited to these filler examples. Any substance may be used which leads to the desired properties.

The proportional amount of the present fibrous fillers is preferably in the range of 5 to 100 parts by weight, more preferably 10 to 100 parts by weight, even more preferably 15 to 80 parts by weight, based on 100 parts by weight of the polyamide resin composition consisting of the above components (A), (B) and (C). If the value is below 5 parts by weight, the resin composition thus obtained does not sufficiently exhibit the desired effect of the fibrous filler addition. If the value exceeds 100 parts by weight, there are the disadvantages that the resin composition thus obtained exhibits poor moldability and that the molded articles produced therefrom exhibit a rough surface.

A polyamide resin composition with a melt viscosity high enough to allow blow or extrusion molding thereof can very advantageously be obtained by adding to a polyamide resin composition obtained according to the present invention a silane compound of the general formula (I):

$$A-Si-(O-R_1)_{3-n} \quad | \quad (R_2)_n \qquad (I)$$

wherein n stands for an integer 0 or 1; A stands for an alkyl or allyl group containing an epoxy or amino group; $R_1$ stands for a methyl or ethyl group; and $R_2$ stands for an alkyl or allyl group.

Examples of the above silane compounds are aminopropyltrimethoxysilane, γ-aminopropyltrimethoxysilane, γ-aminopropyltrimethoxysilane, N-β-(aminoethyl)-γ-aminopropyltrimethoxysilane, bis(β-hydroxyethyl)-γ-aminopropyltriethoxysilane, γ-(2-aminoethyl)aminopropyl-methyldimethoxysilane, γ-anilinopropyltrimethoxysilane, γ-glycidoxypropyltrimethoxysilane, γ-glycidoxypropyltriethoxysilane, and β-(3,4-epoxycylohexyl)ethyltrimethoxy silane. These compounds can be used singly or in combination.

The amount of silane compounds of the general formula (I) is in the range of 0.2 to 3 parts by weight, preferably 0.5 to 2.5 parts by weight, more preferably 1 to 2 parts by weight, based on 100 parts by weight of the above polyamide resin composition. If the value is below 0.2 parts by weight, the resin composition thus obained does not exhibit a melt viscosity high enough to provide good blow and extrusion-moldability. If the value exceeds 3 parts by weight, there is the disadvantage, that the resin composition thus obtained is subject to gelation, resulting in a rough surface of the molded articles produced.

Furthermore the polyamide composition according to the invention may contain stabilizers, fillers, lubricants, pigments, colorants, flame retardants and other common additives as well other polymers.

A polyamide resin composition excellent in both thermal stability over extended periods of time at elevated temperature and resistance to hot oil can be obtained by adding, to a polyamide resin composition according to the present invention, a halogen-containing copper compound and an inorganic iodine compound other than said halogen-containing copper compound. Examples of the above halogen-containing copper compound are cuprous chloride, cupric chloride, cuprous iodide, cuprous bromide, cupric bromide, and other copper compounds. Preferred among these copper compounds are cuprous iodide and cuprous bromide, particularly cuprous iodide. Examples of the above inorganic iodine compound other than said halogen-containing copper compound are potassium iodide, sodium iodide, and other iodine compounds. Preferred among these inorganic iodine compounds is potassium iodide.

The amount of the above halogen compounds incorporated is in the range of 120 to 500 ppm, preferably 120 to 400 ppm, more preferably 150 to 400 ppm, and particularly 150 to 300 ppm calculated as Cu, based on the amount of the polyamide resin composition. If the value is below 100 ppm, the resin composition obtained is of insufficient durability. If it exceeds 500 ppm, there are the disadvantages that the resin composition obtained exhibits poor durability and that it suffers from discoloration. Calculated as iodine, this value is in the range of 1,100 ppm or more, preferably 1,500 to 6,000 ppm. If this value is below the above range, there is the disadvantages that the resin composition obtained tends toward coloration and exhibits poor durability.

Specific examples of fillers are clay, calcined clay, talc, catalpo, silica, alumina, magnesium oxide, calcium silicate, asbestos, sodium aluminate, calcium aluminate, sodium aluminosilicate, magnesium silicate, aluminum hydroxide, calcium hydroxide, barium sulfate, potassium aluminate, sodium aluminate, iron aluminate, sand, glass spheres, carbon black, zinc oxide, antimony trioxide, boric acid, borax, zinc borate, metal powder, metallic whiskers, mica, graphite, titanium oxide, wolastonite, aramide fibers, carbon fibers, glass fibers, glass fiber powder, glass beads, calcium carbonate, zinc carbonate, hydrotalcite, and iron oxide. These fillers may have been subjected to various surface treatments. They can be used singly or in combination. The way of blending of these fillers with the present resin composition is not specifically limited and can be accomplished by any known method.

The present resin composition can be optionally blended with other known polymers depending on the properties required. Examples of such known polymers are polybutadiene, butadiene-styrene copolymer, acrylic rubber, ethylene-propylene polymer, SBR, EPDM, modified EPDM, styrene-butadiene block polymer, styrene-butadiene-styrene radial terblock polymer, polypropyrene, butadiene-acrylonitrile copolymer, polyvinyl chloride, polycarbonate, PET, PBT, polyacetal, polyamide, polyester epoxy resin, polyvinylidene fluoride, polysulfone, ethylene-acetate vinyl copolymer, polyisoprene, natural rubbers, chlorinated butyl rubber, chlorinated polyethylene, PPS resin, polyether ether ketone, fluorine resin, PPO resin, phenolic resins, styrene-methyl methacrylate copolymer, styrene-maleic anhydride copolymer, rubber-modified PPO

resins, styrene-maleimide copolymer, and rubber-modified styrene-maleimide copolymer. These polymers can be used singly or in combination.

Because of its excellent resistance for metallic halide compounds and its moldability, the present resin composition finds a wide range of application in automobile parts, such as filter cups, fenders, spoilers, radiator grilles, cooling fans, radiator tanks, oil pans, valves, brake piping fuel piping, exhaust system parts, and wiper gear, electrical parts, such as connectors, bolts and coil bobbins, and mechanical parts, such as pipes, tubes, oil seals and bearings.

The composition of the present invention can be obtained by the common methods known to the skilled man in the art and include dry blending and melt-mixing in for instance a Banburry mixer or an extruder. The composition can be processed consequently by for instance extrusion, injection molding, blow molding etc.

The different components can be added simultaneously or separately in any sequence. Preferably component (C) is added simultaneously or last.

The present invention is further illustrated by the following examples, but it should not be construed as being limited thereto.

The resin compositions obtained in the following examples and comparative examples were evaluated by the following test methods.

## Examples

(1) Moldability

During melt kneading by means of a biaxial extruder, the proportion of the diameter of the resin flowing out of the nozzle of the extruder to that of the nozzle (die swell proportion d) was measured. After cooling in water, the resulting resin strand rod was subjected to pelletization, i.e. cut into pieces of suitable length. During the pelletization, the difficulty encountered in cutting was determined in order to evaluate the molding stability.

(2) Resistance to metallic halide compounds

The pelletized resin prepared with the biaxial extruder was then subjected to injection molding at a cylinder temperature of 300 °C (240 °C in Example 7) and a mold temperature of 80 °C in order to obtain test pieces with a length of 100 mm, a width of 25 mm, and a thickness of 3.2 mm. A drop of saturated aqueous solution of calcium chloride was allowed to fall onto the central portion of the test pieces. After being allowed to stand in an 100 °C hot-air oven over 1 hour, the test pieces were inspected with respect of surface conditions. The degree of cracking was determined in order to evaluate the resistance to metallic halide compounds.

(3) Melt viscosity

The melt viscosity of the test specimens was measured at a temperature of 300 °C and at a shear rate of 100 $sec^{-1}$ by means of a flow tester provided according to ASTM-D-1238.

(4) Blow moldability

The resin compositions were subjected to extrusion at a temperature of 300 °C by means of an extruder with a diameter of 55 mm in order to form pre-moldings. Thus, cylindrical containers with an external diameter of 60 mm and a length of 200 mm were molded. The conditions of these pre-moldings and the external appearance of the molded articles were determined in order to evaluate the blow moldability.

(5) Long-term thermal stability

After having been allowed to stand in a 185 °C air oven, the molded test pieces were compared with respect to the half life time (HLT) of the tensile strength.

(6) Resistance to hot oil

After having been dipped into gear oil ("Mobile SHC 629") at a temperature of 130 °C over 300 hours, the molded test pieces were compared with respect to the percentage of retention of the tensile strength.

$$\frac{\text{Tensile strength after dipping}}{\text{Tensile strength before dipping}} \times 100\ (\%)$$

Example 1-8

Nylon 46 with a relative viscosity of 3.70 (determined in 97% sulfuric acid at a temperature of 30 °C and a concentration of $10^{-2}$ g/ml) and Nylon 12 ("Grilamide 25" available from EMS Chemie) were mixed in the proportion set forth in Table 1. As bifunctional or higher carboxylic acids or anhydrides thereof, there were further incorporated pyromellitic anhydride, pyromellitic acid, isophthalic acid, and adipic acid in the proportions set forth in Table 1. These mixture were then subjected to melt extrusion by means of a biaxial extruder in order to obtain pelletized resin compositions. During this procedure, the die swell proportion and molding stability were determined.

The pelletized resin compositions thus obtained were subjected to injection molding at a barrel temperature of 300 °C and a mold temperature of 80 °C in order to obtain test pieces, of which the mechanical strength and resistance to metallic halide compounds were determined.

As shown by the results set forth in Table 1, the resin compositions obtained in Examples 1 to 8 exhibit excellent moldability, high mechanical strength, and high resistance to metallic halide compounds.

Example 9

A resin composition was prepared by addition of glass fibers (03JAFT2, available from Asahi Fiber Glass) to the mixture of Nylon 46, Nylon 12 and pyromellitic anhydride according to in Example 1 in the proportion set forth in Table 1. The resin composition thus prepared was then evaluated in the same manner as in Example 1 to 8. The results show that the resin composition of Example 9 exhibits excellent moldability, mechanical strength, and resistance to metallic halide compounds.

Example 10

A resin composition was prepared in the same manner as in Example 1, except that an aromatic group-containing alicyclic polyamide ("Grilamide TR55", available from EMS Chemie) was used instead of Nylon 12, and pyromellitic anhydride was further added thereto in the proportion set forth in Table 1. The results set out in Table 1 show that the resin composition of Example 10 exhibits excellent moldability, mechanical strength, and resistance to metallic halide compounds.

Example 11

A resin composition was prepared in the same manner as in Example 1, except that Nylon 6 ("Capron 8200", available from Allied) was used instead of Nylon 46, and Nylon 12 and pyromellitic anhydride were further added thereto in the proportions set forth in Table 1. The resin composition thus prepared was evaluated in the same manner as in Example 1, except that the barrel temperature was 240 °C. The results set forth in Table 1 show that the resin composition of Example 11 exhibits excellent moldability, mechanical strength, and resistance to metallic halide compounds.

Comparative example 1

A resin composition was prepared in the same manner as in Example 1, except that there were not incorporated any bifunctional or higher carboxylic acids or anhydrides thereof. The resin composition exhibits a considerable die swell proportion of 250 %. Furthermore, resin strands produced from the resin composition were rather easily cut. Thus, the resin composition could not be subjected to a stable manufacturing procedure. Moreover, the resin composition exhibited poor impact strength as compared with the specimen according to Example 1.

Comparative example 2

A resin composition was prepared in the same manner as in Example 9, except that there were not incorporated any bifunctional or higher carboxylic acids or anhydrides thereof. The resin composition exhibited excellent moldability and resistance to metallic halide compositions, but showed rather poor mechanical strength as compared with the specimen according to Example 9.

Comparative example 3

A resin composition was prepared in the same manner as in Example 1, except that there were incorporated bifunctional or higher carboxylic acids or anhydrides thereof in amounts exceeding the present range. In this case, the molten resin underwent decomposition in the molding machine and could not be put to practical use.

Comparative examples 4 and 5

Two resin compositions were prepared in the same manner as in Example 1, except that there were incorporated compounds containing monofunctional carboxylic acids instead of the bifunctional or higher carboxylic acids or anhydrides thereof, respectively.

In Comparative Example 4, although there was incorporated 0.5 part by weight stearic acid, no improvements were recognized in respect of inhibition of die swelling and of molding stability. In Comparative Example 5, although there was incorporated 1.5 parts by weight stearic acid, the resulting vigorous foaming entirely prevented molding.

Comparative examples 6 and 7

Two resin components were prepared by varying the proportion of polyamid (A) and polyamide (B) from the range set forth in Claim 1.

In Comparative Example 6, there were used a higher polyamide (A) proportion and a lower polyamide (B) proportion. The resin composition thus prepared exhibited excellent mechanical strength and moldability, but, disadvantageously, poor resistance to metallic halide compounds.

In Comparative Example 7, there were used a lower polyamide (A) proportion and a higher polyamide (B) proportion. The resin composition thus prepared exhibited excellent resistance to metallic halide compositions, but, disadvantageously, poor mechanical strength, particularly a low bending modulus, and poor moldability.

<u>**T A B L E I**</u>

| Proportion (parts by wt.) | C/N proportion | EXAMPLE 1 | 2 | 3 | 4 | 5 | 6 | 7 | 8 | 9 | 10 | 11 |
|---|---|---|---|---|---|---|---|---|---|---|---|---|
| Nylon 46 | 5 | 70 | 70 | 70 | 70 | 50 | 90 | 70 | 70 | 70 | 70 | |
| Nylon 6 [1)] | 6 | | | | | | | | | | | 70 |
| Nylon 12 [2)] | 12 | 30 | 30 | 30 | 30 | 50 | 10 | 30 | 30 | 30 | | 30 |
| Aromatic group-containing alicyclic polyamide [3)] | 11.5-12 | | | | | | | | | | 30 | |
| Glass fiber [4)] | | 0.5 | | | | 0.5 | 0.5 | 2.0 | 0.05 | 0.5 | 0.5 | 0.5 |
| Pyromellitic anhydride | | | 0.5 | | | | | | | | | |
| Pyromellitic acid | | | | | | | | | | | | |
| Isophthalic acid | | | | 0.5 | | | | | | | | |
| Adipic acid | | | | | 0.5 | | | | | | | |
| Mechanical strength | | | | | | | | | | | | |
| Bending modulus ($kg/cm^2$) | | 29600 | 29800 | 31000 | 31000 | 27400 | 30200 | 30600 | 29700 | 85000 | 31000 | 27300 |
| Tensile strength (%) | | 840 | 835 | 620 | 470 | 740 | 890 | 400 | 840 | 1610 | 890 | 720 |
| Izod impact strength (kg.cm/cm) | | 8 | 8 | 6 | 6 | 8 | 10 | 5 | 6 | 13 | 8 | 7 |

TABLE I (continued)

| | EXAMPLE 1 | 2 | 3 | 4 | 5 | 6 | 7 | 8 | 9 | 10 | 11 |
|---|---|---|---|---|---|---|---|---|---|---|---|
| Moldability | | | | | | | | | | | |
| Die swelling proportion (%) | 100 | 100 | 100 | 100 | 150 | 100 | 100 | 120 | 100 | 100 | 100 |
| Molding stability * | # | # | # | # | Δ | # | o | Δ | # | # | # |
| Resistance to metallic halide compounds * | o | o | o | o | # | Δ | o | o | o | o | o |

* Molding stability and resistance to metallic halide compositions are evaluated in four qualifications: # (excellent), o (good), Δ (fair), x (poor)

1) "Capron 8200$^R$" (available from Allied)

2) "Grilamide L25$^R$" (available from EMS Chemie)

3) "Grilamide TR55$^R$ (available from EMS Chemie)

4) 03JAFT2 (available from Asahi Fiber Glass)

TABLE II

| Proportion (parts by wt.) | C/N Proportion | Comparative Example 1 | 2 | 3 | 4 | 5 | 6 | 7 |
|---|---|---|---|---|---|---|---|---|
| Nylon 46 | 5 | 70 | 70 | 70 | 70 | 70 | 94 | 20 |
| Nylon 12 2) | 12 | 30 | 30 | 30 | 30 | 30 | 5 | 80 |
| Glass fibers 4) | | | 43 | | | | | |
| Pyromellitic anhydride | | | | 5.0 | | | 0.5 | 0.5 |
| Stearic acid | | | | | 0.5 | 1.5 | | |
| Mechanical strength | | 29300 | 54000 | - | - | - | 32400 | 23000 |
| Tensile stength ($kg/cm^2$) | | 540 | 930 | - | - | - | 980 | 610 |
| Izod-impact strength (kg.cm/cm) | | 5 | 6 | - | - | - | 9 | 8 |

TABLE II (continued)

| | Comparative Example | | | | | | |
|---|---|---|---|---|---|---|---|
| | 1 | 2 | 3 | 4 | 5 | 6 | 7 |
| Moldability | | | | | | | |
| Die swelling proportion (%) | 250 | 100 | - | 250 | Foamed | 100 | 200 |
| Molding stability * | x | o | x | x | x | # | x |
| Resistance to metallic halide compounds * | o | o | - | - | - | x | # |

* Molding stability and resistance to metallic halide compounds are evaluated in four qualifications: # (excellent), o (good), Δ (fair), x (poor)

2) "Grilamide L25" R (available from EMS Chemie)

3) 03JAFT2 R (available from Asahi Fiber Glass)

Examples 12-15

In examples 12 to 15, resin compositions were prepared in the same manner as in Example 1, except that γ-glycidoxypropyltrimethoxysilane ("SH 6040", available from Toray Silicone) or N-β-(aminoethyl)-γ-aminopropyltrimethoxysilane ("SH 6020", available from Toray Silicone) was further added to the mixture of Nylon 46, Nylon 12 and pyromellitic anhydride in the proportion set forth in Table 3, respectively.

The melt viscosity of the resin compositions thus prepared was measured. These resin compositions were also subjected to blow molding by means of a blow molder in order to evaluate the conditions of the resulting pre-moldings and the external appearance of the molded articles thus prepared. The results set

forth in Table 3 show that the resin compositions of Examples 12 to 15 exhibit high melt viscosity as well as excellent conditions of the pre-moldings and excellent appearance of the molded articles.

Comparative examples 8 and 9

Two resin compositions were prepared in the same manner as in Example 12, except that there was incorporated γ-glycidoxypropyltrimethoxysilane in amounts outside the present range.

In Comparative Example 8, where the amount of γ-glycidoxypropyltrimethoxysilane added was below the present range, the resin composition thus prepared exhibited low melt viscosity, which causes draw-down of the pre-mold, making it impossible to obtain blow-molded articles. In Comparative Example 9, where the amount of γ-glycidoxypropyltrimethoxysilane added was above the present range, the resin composition thus prepared was subjected to gelation of the pre-mold, which resulted in rather poor external appearance of the blow-molded articles.

TABLE III

| | | Example | | | | Comparative Example | |
|---|---|---|---|---|---|---|---|
| | | 12 | 13 | 14 | 15 | 8 | 9 |
| Proportion (Parts by wt.) | C/N Proportion | | | | | | |
| Nylon 46 | 5 | 70 | 70 | 70 | 70 | 70 | 70 |
| Nylon 12 | 12 | 30 | 30 | 30 | 30 | 30 | 30 |
| Pyromellitic anhydride | | 0.5 | 0.5 | 0.5 | 0.5 | 0.5 | 0.5 |
| γ-glycidoxypropyltrimethoxysilane | | 0.5 | 1.5 | 2.5 | | 0.1 | 5.0 |
| N-β-(aminoethyl(- -aminopropyltrimethoxysilane | | | | | 1.5 | | |
| Methanical strength | | | | | | | |
| Bending modulus (kg/cm$^2$) | | 30200 | 31500 | 32600 | 31100 | 29900 | 34300 |
| Tensile strength (kg/cm$^3$) | | 880 | 910 | 940 | 890 | 850 | 1150 |
| 1/8 nothced Izod impact strength (kg.cm/cm) | | 13 | 13 | 14 | 12 | 12 | 16 |
| Blow-moldability | | | | | | | |
| Pre-mold conditions | | Excellent | Excellent | Excellent | Excellent | drawdown | Gelation |
| External appearance of molded articles | | Excellent | Excellent | Excellent | Excellent | - | Poor |
| Melt viscosity (poise) | | 4900 | 8200 | 13000 | 7700 | 2900 | 26000 |

Examples 16 to 20

In Examples 16 to 20, resin compositions were prepared in the same manner as in Example 1, except that CuI and KI were added to the mixture of Nylon 46, Nylon 12 and pyromellitic anhydride in the proportions set forth in Table 4, respectively. The results set out in Table 4 show that the resin compositions of Examples 16 to 20 exhibit excellent long-term thermal stability and resistance to hot oil.

Comparative Examples 10 and 11

In Comparative Examples 10 and 11, resin compositions were prepared in the same manner as in Example 16, except that there were not incorporated Cu and I compounds nor Nylon 12 and pyromellitic anhydride. The results set forth in Table 4 show that these resin compositions exhibit rather poor long-term thermal stability or resistance to hot oil.

Comparative Examples 12 to 14

In Comparative Examples 12 to 14, resin compositions were prepared with added amounts of Cu or I compounds outside the present range. The results set forth in Table 4 show that these resin compositions exhibit poor long-term thermal stability and resistance to hot oil.

TABLE IV

| | | Example | | | | | Comparative Example | | | | |
|---|---|---|---|---|---|---|---|---|---|---|---|
| | | 16 | 17 | 18 | 19 | 20 | 10 | 11 | 12 | 13 | 14 |
| Proportion (Parts by wt.) | C/N Proportion | | | | | | | | | | |
| Nylon 46 | 5 | 70 | 70 | 70 | 70 | 70 | 70 | 100 | 70 | 70 | 70 |
| Nylon 12 | 12 | 30 | 30 | 30 | 30 | 30 | 30 | - | 30 | 30 | 30 |
| Pyromellitic anhydride | | 0.5 | 0.5 | 0.5 | 0.5 | 0.5 | 0.5 | - | 0.5 | 0.5 | 0.5 |
| Cu (ppm) | | 225 | 150 | 280 | 225 | 225 | - | 225 | 80 | 800 | 225 |
| I (ppm) | | 2250 | 2250 | 2250 | 4500 | 1500 | - | 2250 | 2250 | 2250 | 500 |
| Long-term thermal stability HLT (Hr) | | 400 | 400 | 390 | 390 | 400 | 20 | 350 | 150 | 240 | 250 |
| Percentage retention of resistance to hot air (%) | | 88 | 86 | 83 | 83 | 84 | 72 | 50 | 76 | 80 | 78 |

**Claims**

1. Polyamide resin composition, comprising a mixture of:

(a) 30 to 90 parts by weight of a polyamide (A), wherein the proportion of the number of carbon atoms to that of nitrogen atoms in the polymer (C/N) is in the range of 4 to 7;

(b) 10 to 70 pars by weight of a polyamide (B), wherein the proportion of the number of carbon atoms to that of nitrogen atoms in the polymer (C/N) is more than 7, (a) + (b) being 100 parts;

(c) 0.02 to 3 parts by weight, based on 100 parts of said mixture, of a compound (C) containing two

or more carboxyl groups or an acid anhydride group.

2. Polyamide resin composition according to claim 1, into which there are blended 5 to 100 parts by weight of a fibrous filler based on 100 parts by weight of the composition.

3. Polyamide resin composition according to claim 1 or 2 into which there are incorporated 0.2 to 3 parts by weight of a silane compound of the general formula (I) based on 100 parts by weight of the composition:

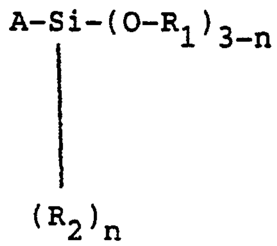

(I)

wherein n stands for 0 or 1; A stands for an alkyl or allyl group containing an epoxy or amino group: $R_1$ stands for a methyl or ethyl group; and $R_2$ stands for an alkyl or allyl group.

4. Polyamide resin composition according to claim 1, 2 or 3, into which there are incorporated a halogen-containing copper compound and an inorganic iodine compound in amounts of between 120 and 500 ppm calculated as Cu and 1,100 ppm or more calculated as I.

European Patent Office

# EUROPEAN SEARCH REPORT

Application Number

EP 90 20 0830

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 600 631 (THE DOW CHEMICAL COMPANY) * claims; page 3, lines 1-7; page 6, line 16 - page 7, line 28; page 12, lines 1-15; examples * | 1 | C 08 L 77/00<br>C 08 K 5/09<br>C 08 K 5/54<br>C 08 K 3/16<br>C 08 K 7/14 |
| D,A | PATENT ABSTRACTS OF JAPAN vol. 7, no. 66 (C-157)(1211), 18 March 1983; & JP-A-57212252 (UBE KOSAN K.K.) 27.12.1982 | 1 | |
| A | PATENT ABSTRACTS OF JAPAN vol. 7, no. 139 (C-171)(1284), 17 June 1983; & JP-A-5853950 (TORAY K.K.) 30.03.1983 | 1,2 | |
| A | EP-A-0 282 730 (BAYER AG) * claims; examples * | 1,2,4 | |
| A | WO-A-8 603 214 (STAMICARBON B.V.) * page 2, line 9 - page 3, line 27; examples 9,10; claims * | 1-3 | **TECHNICAL FIELDS SEARCHED (Int. Cl.5)** |
| A | EP-A-0 281 691 (STAMICARBON B.V.) * claims * | 1,4 | C 08 L<br>C 08 K |
| A | US-A-3 968 071 (A. MIYAMOTO et al.) * claims * | 1,2 | |

The present search report has been drawn up for all claims

| Place of search | Date of completion of the search | Examiner |
|---|---|---|
| BERLIN | 19-07-1990 | BOEKER R.B. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document